# EUROPÄISCHE PATENTSCHRIFT

(11) **EP 0 354 302 B1**
(45) Veröffentlichungstag und Bekanntmachung des Hinweises auf die Patenterteilung: **01.12.1993**
(21) Anmeldenummer: 89107710.9
(22) Anmeldetag: 27.04.1989
(51) Int. Cl.: G01S 13/76

(54) **Verfahren zur Identifikation von Schiffen**
Method of identifying ships
Procédé d'identification de navires

(30) Priorität: 08.08.1988 DE 3826870
(43) Veröffentlichungstag der Anmeldung: 14.02.1990
(73) Patentinhaber: ESG Elektroniksystem-und Logistik-Gesellschaft mit beschränkter Haftung, D-81675 München (DE)
(72) Erfinder: Fischer, Dietmar, Dr., D-8025 Unterhaching (DE); Müller, Manfred, D-8209 Stephanskirchen (DE)
(74) Vertreter: Prechtel, Jörg, Dipl.-Phys. Dr.

(56) Entgegenhaltungen:
- DE-A- 2 248 718
- FR-A- 1 209 200
- FR-A- 1 221 512
- US-A- 4 173 016
- Prospekt:" SIS-Product Information: A System for Automatic Identifacation of Ships and Helicopters" NOR CONTROL SURVEILLANCE SYSTEMS a.s 1987.

## Beschreibung

Die Erfindung betrifft ein Verfahren zur Identifikation von Schiffen mittels einer Abfrageeinheit, die über Funk mit Antworteinheiten an Bord von zu identifizierenden Schiffen in Verbindung tritt, wobei die mit einer Radaranlage mit Radarzielbestimmungseinrichtung verbundene Abfrageeinheit per Funk Abfragesignalfolgen abgibt, die ein einen räumlichen Suchbereich festlegendes Suchbereichssignal umfassen, und wobei die die Abfragesignalfolgen empfangenden Antworteinheiten überprüfen, ob die eigene Position innerhalb des räumlichen Suchbereichs liegt und ggf. per Funk eine das Schiff kennzeichnende Indentifikationssignalfolge zum Empfang durch die Abfrageeinheit abgeben.

Aus dem Prospekt "SIS-Product Information: A System for Automatic Identifacation of Ships and Helicopters" NOR-CONTROL Surveillance Systems a.s., 1987 ist ein derartiges Verfahren bekannt, welches die Identifizierung eines Schiffes mit bekannter Position erlaubt. Die von der Abfrageeinrichtung abgegebene Frage lautet etwa so:"Wer befindet sich in der Position XX.xx, YY.yy?". Falls sich auf diese Anfrage hin keine Antworteinheit meldet, wird durch Reduzierung der Genauigkeit der Ortsangabe (durch Weglassen entsprechender Dezimalstellen) der räumliche Suchbereich vergrößert, bis Kontakt zu einem Schiff hergestellt worden ist (sofern sämtliche Schiffe mit Antworteinheiten versehen sind). Bei der häufig relativ großen Ungenauigkeit der Positionsbestimmung durch die Abfrageeinheit bzw. durch die Bordanlage ergibt sich zumindest bei dichtem Schiffsverkehr das Problem, daß sich im jeweiligen räumlichen Suchbereich häufig mehrere Schiffe befinden, die dann auf die Abfragesignalfolge hin ihre jeweilige Identifikationssignalfolge abgeben. Dies macht weitere Abfragen erforderlich, wobei u.U. von einer, die Abfrageeinheit bedienenden Person über Sprechfunk geklärt werden muß, welches das gesuchte Schiff ist.

Der Erfindung liegt die Aufgabe zugrunde, die Zuverlässigkeit des eingangs genannten Verfahrens, insbesondere bezüglich der selbsttätigen Schiffsidentifizierung, zu erhöhen.

Diese Aufgabe wird dadurch gelöst, daß die Radarzielbestimmungeinrichtung den Kurs eines im räumlichen Suchbereich zu identifizierenden Schiffes bestimmt, daß die Abfrageeinheit daraufhin ein entsprechendes Kurssignal als Teil der Abfragsignalfolge abgibt, und daß die die Abfragesignalfolge empfangenden Antworteinheiten dann, wenn die eigene Position im räumlichen Suchbereich liegt überprüfen, ob der eigene Kurs mit dem übermittelten Kurs übereinstimmt und nur im Falle der Übereinstimmung innerhalb vorgegebener Toleranzen die jeweilige Identifikationssignalfolge abgeben.

Es hat sich herausgestellt, daß der Kurs als weiterer Differenzierungsparameter zusätzlich zur Position zu einer wesentlichen Erhöhung der Verfahrensselektivität führt, da zum einen sich Schiffskurse sowohl mit Hilfe der Radarzielbestimmungseinrichtung als auch mit Hilfe der üblichen Navigationssysteme an Bord der Schiffe mit relativ hoher Genauigkeit, zumindest im Grad-Bereich, ermitteln lassen. Gerade im möglichen Konfliktfall, wenn rasch die beteiligten Schiffe identifiziert werden müssen, um mit diesen Sprechfunkkontakt aufnehmen zu können, unterscheiden sich die Kurse im allgemeinen deutlich voneinander. Hier kann durch das erfindungsgemäße Verfahren rasch, zuverlässig und ohne Sprechfunk-Rückfragen das jeweilige Schiff identifiziert werden.

Zusätzlich oder alternativ kann zur Erhöhung der Selektivität erfindungsgemäß derart vorgegangen werden, daß die einen Schiffspositionsspeicher aufweisende Abfrageeinheit vor Abgabe der Abfragesignalfolge feststellt, ob von den im Schiffspositionsspeicher gespeicherten Schiffen mehr als eines in den gegenwärtigen räumlichen Suchbereich fällt, und, falls dies zutrifft, den räumlichen Suchbereich so weit verkleinert, bis lediglich ein einziges gespeichertes Schiff in den räumlichen Suchbereich fällt.

Besonders bevorzugt als Kombination der beiden eben beschriebenen Maßnahmen wird vorgeschlagen, daß die Abfrageeinheit nur dann den räumlichen Suchbereich verkleinert, wenn die Radarzielbestimmungseinrichtung festgestellt hat, daß wenigstens zwei in den gegenwärtigen räumlichen Suchbereich fallende gespeicherte Schiffe im wesentlichen gleichen Kurs haben, oder wenn wenigstens eines der in den gegenwärtigen räumlichen Suchbereich fallenden gespeicherten Schiffe unbekannten Kurs hat. Die selbsttätige Suchbereichsverkleinerung kann bedarfsweise durch entsprechende manuelle Eingabe unterdrückt werden.

Auf diese Weise wird in vielen Fällen eine Verkleinerung des räumlichen Suchbereichs vermieden,und damit auch die Gefahr, daß bei zu kleinen räumlichen Suchbereich ein an sich in räumlichen Suchbereich fallendes Schiff nicht identifiziert wird (auf Grund zu ungenauer oder fehlerhafter Positionsbestimmung bei der Abfrageeinheit und/oder bei der jeweiligen Antworteinheit). Dabei wird die hohe Selektivität der Kursinformation genutzt.

Der die Lage des räumlichen Suchbereichs festlegende Suchbereichsmittelpunkt kann beispielsweise dadurch eingegeben werden, daß auf einem Graphikbildschirm (graphic display) ein Radarziel angesteuert wird, vorzugsweise mittels Maus. Da diese Art der Eingabe im allgemeinen nicht allzu genau ist, wird zur weiteren Erhöhung der Verfahrensselektivität vorgeschlagen, daß nach Eingabe eines Suchbereichsmittelpunkts in die Abfrageeinheit, vorzugsweise mittels Maus, die Abfrageeinheit die Position des dem Suchbereichsmittelpunkt nächstgelegenen gespeicherten Schiffes feststellt und diese Position anschließend als neuen Suchbereichsmittelpunkt festlegt. Die Eingabe des Suchbereichsmittelpunkts mittels Maus hat den Vorteil der größeren Benutzerfreundlichkeit und Schnelligkeit. Es kann jedoch auch eine
Eingabe beispielsweise über α-numerische Tastatur erfolgen. Alternativ oder zusätzlich zur vorstehend beschriebenen Verfahrensweise, gemaß welcher ein durch Eingabe eines Suchbereichsmittelpunkts bestimmtes Schiff möglichst rasch und zuverlässig identifiziert wird, kann in einer weiteren erfindungsgemäßen Betriebsart zur selektiven Überwachung eines Kontrollgebiets vorgesehen sein, daß die Abfrageeinheit in regelmäßigen Zeitabständen und/oder jeweils ausgelöst durch ein auf ein Einfahren eines Schiffes in das Kontrollgebiet hinweisendes Signal wenigstens eine Abfragesignalfolge abgibt. Es erfolgt hier also eine routinemäßige Überwachung des Kontrollgebiets mit positionsfeststellung sämtlicher Schiffe zu den Abfragezeitpunkten. Diese Art der Überwachung läßt sich auch unabhängig von einer Radaranlage durchführen. Für den Fall der Auslösung der Abfrage durch ein Hinweissignal ist der Einsatz einer Radaranlage von Vorteil, um dieses Hinweissignal zu liefern; es sind jedoch auch andere Auslöser denkbar, wie z.B. das Durchfahren einer Lichtschranke.

Im Falle größerer Kontrollgebiete, z.B. eines Überwachungsstreifens entlang der deutschen Nordseeküste, wird dieses vorteilhafterweise in mehrere räumliche Suchbereich eingeteilt, wobei dann erfindungsgemäß die Abfrageeinheit selbsttätig der Reihe nach sämtlich räumliche Suchbereiche durch Abgabe von Abfragesignalfolgen mit entsprechenden Suchbereichssignalen überprüft.

Zur lückenlosen Überwachung wird vorgeschlagen, daß die Abfrageeinheit sämtlich räumliche Suchbereich zyklisch überprüft.

Zur Erhöhung der Zuverlässigkeit der selbsttätigen Schiffsidentifizierung wird alternativ oder zusätzlich zu den vorstehend beschriebenen Maßnahmen vorgeschlagen, daß die Abfrageeinheit dann, wenn sie sich zeitlich überlappende Identifikationssignale empfängt, mit der nächsten Abfragesignalfolge ein Zufallszeit-Signal abgibt, welches bei Empfang durch eine Antworteinheit diese veranlaßt, ihre Identifikationssignalfolge mit einer eigenen zufallsgesteuerten Zeitverzögerung abzugeben. Um lange Wartezeiten bei der Identifikation zu vermeiden, wird bevorzugt erst beim zweiten Identifkationsversuch die Überlagerung von Identifikationssignalen (garbling) mit großer Wahrscheinlichkeit ausgeschlossen. Tritt bei der ersten Abfrage "garbling" ein, so wird erfindungsgemäß bei der nächsten Abfrage erreicht, daß die einzelnen angesprochenen Antworteinheiten jeweils für sich mit zufallsgesteuerter Zeitverzögerung ihre Identifikationssignalfolge abgeben. Die Wahrscheinlichkeit, daß zwei Schiffe mit gleicher zufallsbedingter Zeitverzögerung antworten, ist äußerst gering.

In Weiterbildung der Erfindung wird vorgeschlagen, daß die Abfrageeinheit zusammen mit der Abfragesignalfolge ein eingegebenes Identifikationsmerkmal für ein bestimmtes Schiff abgibt, welches nur die Antworteinheit dieses Schiffes zur Abgabe einer Antwortsignalfolge veranlaßt. Diese Variante wird beispielsweie dann eingesetzt, wenn von einem bestimmtem Schiff, z.B. einem Rettungskreuzer, die momentane genaue Position unbekannt ist, z.B. aufgrund unklarer Radarsituation. Auf die abgegebene Abfragesignalfolge mit Identifikationsmerkmal (z.B. Identifikationssignalfolge entsprechend dem Funkrufzeichen) erfolgt die Abgabe der Antwortsignalfolge des angesprochenen Schiffs, wobei in der Antwortsignalfolge zumindest die momentane tatsächliche Schiffsposition enthalten ist.

Eine weitere Möglichkeit, um einer "Garbling"-Situation zu begegnen, besteht erfindungsgemäß darin, daß die Abfrageeinheit zusammen mit der Abfragesignalfolge ein eingegebenes Identifikationsmerkmal für ein bestimmtes Schiff abgibt, welches nur die Antworteinheiten derjenigen Schiffe zur Abgabe einer Antwortsignalfolge veranlaßt, deren Identifikationsmerkmal nicht mit dem in der Abfragesignalfolge übermittelten Identifikationsmerkmal übereinstimmt. Hierbei ist vorausgesetzt, daß eines der beteiligten Schiffe bekannt ist. Erfindungsgemäß wird die Abgabe der Abfragesignalfolge dieses Schiffes unterdrückt, so daß sich dementsprechend die "Garbling"-Situation bessert.

Die Erfindung betrifft auch eine Vorrichtung gemäß Anspruch 11.

Die Erfindung wird im folgenden an bevorzugten Ausführungsbeispielen anhand der Zeichnung erläutert.

Es zeigt:
- Fig. 1: eine vereinfachte Blockdiagramm-Darstellung einer Abfrageeinheit;
- Fig. 2: eine vereinfachte, blockdiagrammartige Darstellung einer Antworteinheit;
- Fig. 3: eine flußdiagrammartige Darstellung der bei einer ersten Ausführungsform des erfindungsgemäßen Verfahrens bei der Abfrageeinheit ablaufenden Verfahrensschritte;
- Fig. 4: eine blockdiagrammartige Darstellung der bei einer Antworteinheit ablaufenden Verfahrensschritte und
- Fig. 5: eine der Fig. 3 entsprechende, blockdiagrammartige Darstellung einer weiteren erfindungsgemäßen Ausgestaltung des Verfahrens.

Mit dem im folgenden zu beschreibenden Verfahren läßt sich eine Beratung, Überwachung oder Führung von Schiffsverkehr, insbes. in Gebieten mit hoher Verkehrsdichte, durchführen, wobei die sog. VTS-Zentrale (VTS=Vessel Traffic Services) mit der im folgenden näher beschriebenen Abfrageeinheit im allgemeinen an Land stationiert ist, wenn auch eine Stationierung von Abfrageeinheiten in einem Wasser-oder Luftfahrzeug u.U. in Frage kommt. Eine schnelle und weitgehend automatisierte Identifikation von vorbeifahrenden Schiffen ist von besonderer Wichtigkeit, um bei sich anbahnenden Konfliktsituationen rechtzeitig und gezielt eingreifen zu können.

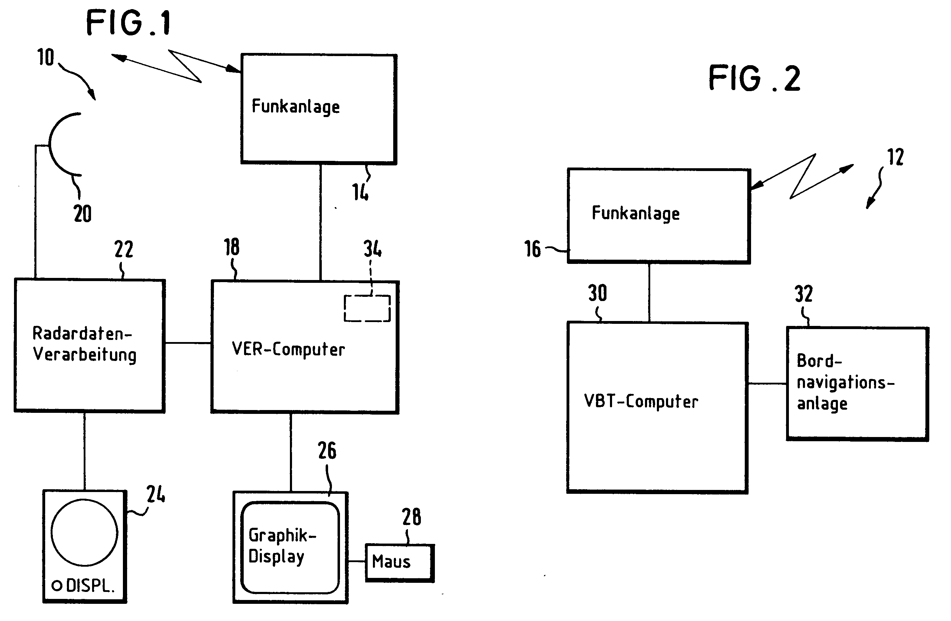

Das automatische Identifikationsverfahren setzt neben der in Fig. 1 vereinfacht dargestellten Abfrageeinheit 10 als Teil der Überwachungszentrale jeweils eine in Fig. 2 angedeutete Antworteinheit 12 bei möglichst allen beteiligten Schiffen voraus. Beide Einheiten 10, 12 kommunizieren miteinander per Funk; die Funkanlage der Ahfrageeinheit 10 ist in Fig. 1 mit 14 bezeichnet und die der Antworteinheit 12 mit 16. Das aus der Abfrageeinheit 10 und den Antworteinheiten bestehende System wird als VIS (Vessel Identification System) bezeichnet. Die Datenverarbeitungs-Zentraleinheit der Abfrageeinheit ist in Fig. 1 als Block 18 angedeutet und mit VER-Computer bezeichnet (VER=VIS-Einsatzrechner). An diesen Block 18 ist in einer bevorzugten Ausführungsform des erfindungsgemäßen Verfahrens eine Radaranlage mit der Möglichkeit einer Radarzielbestimmung anschlossen; in Fig. 1 ist ein entsprechender Radarschirm 20 angedeutet, ein mit "Radardatenverarbeitung" bezeichneter Block 22 sowie eine mit "DISPL." (display) bezeichnete und die Bezugsziffer 24 tragende Anzeigeeinheit. Zur optischen Anzeige des Kontrollgebiets sowie zur Befehlseingabe ist an die Zentraleinheit 18 eine mit "Graphic-Display" bezeichnete interaktive Anzeigeeinheit 26 anschlossen, die wiederum mittels Maus 28 (oder Rollkugel oder dergl.) ansteuerbar ist.

Dementsprechend besteht die Antworteinheit aus einer Datenverarbeitungszentraleinheit 30, die mit VBT-Computer bezeichnet ist (VBT=VIS-Bordtransponder), an die sowohl die genannte Funkanlage 16 als auch eine Bordnavigationsanlage 32 angeschlossen ist.

Wesentlicher Teil der Zentraleinheit 18 ist ein in Fig. 1 strichliert angedeuteter Datenspeicher 34, welcher zu den einzelnen, im räumlichen Kontrollbereich festgestellten Schiffen Informationsdaten abspeichert, insbesondere Schiffsposition, und, soweit festgestellt, Kurs- und Schiffsidentifikation (insbesondere Funkrufzeicben).

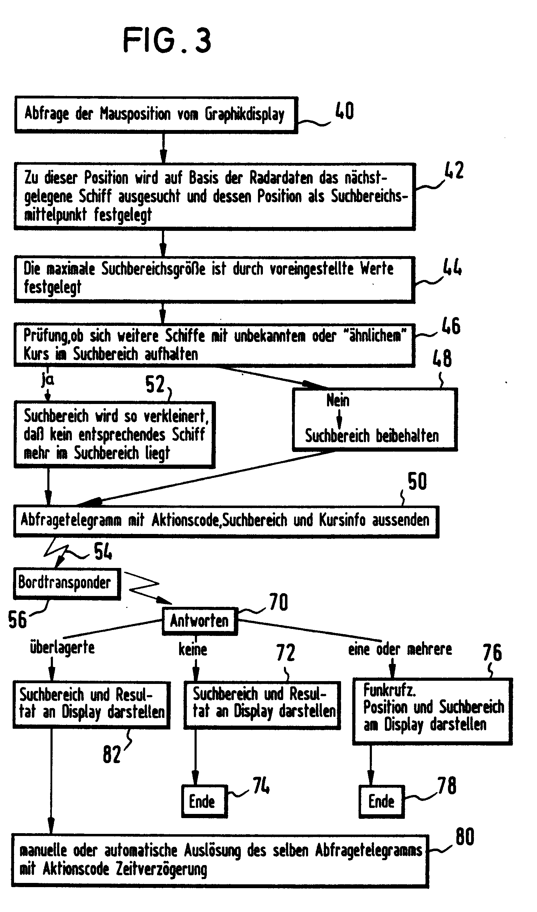

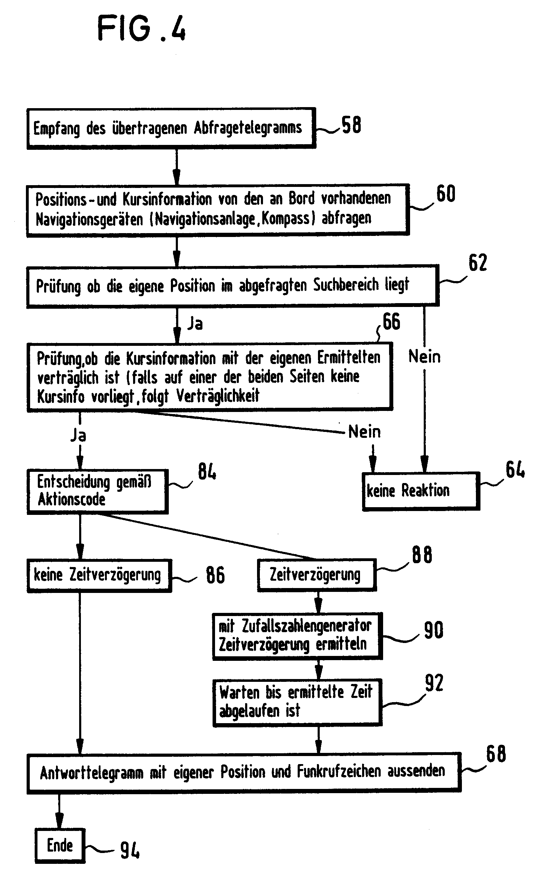

Entdeckt der Nautiker in der Überwachungszentrale, daß in einem bestimmten Gebiet eine gefährliche Situation im Entstehen ist, beispielsweise auf Grund von auf Kollisionskurs liegenden Schiffen, was er durch Beobachtung beispielsweise der Anzeigeeinheit 26 oder 24 bemerkt, ist es für ihn äußerst wichtig, möglichst rasch und zuverlässig die Funkrufzeichen der beteiligten Schiffe zu erhalten. Er gibt dann insbesondere mittels der Maus 28 oder über α-numerische Zahleneingabe in die Zentraleinheit 18 einen Suchbereichsmittelpunkt ein, woraufhin von der Abfrageeinheit 10 zugleich eine automatische Identifikation der im räumlichen Suchbereich liegenden Schiffe (Radarziele) durchgeführt wird. Dies wird im folgenden anhand der Fig. 3 und 4 näher erläutert.

Im Startblock 40 des Ablaufdiagramms der Fig. 3 erfolgt die Abfrage der Mausposition am Graphic Display (sofern Mauseingabe gewählt wird). Der Nautiker wird sich zwar im allgemeinen bemühen, die Mausposition mit dem ihn interessierenden Radarziel zur Deckung zu bringen ; aus Zeitgründen sowie aus Gründen zu geringer Auflösung wird im allgemeinen die eingegebene Mausposition jedoch von der Radarziel-Position (=Eingangsspeicher der Schiffsposition) abweichen. Um nach Möglichkeit zu vermeiden, daß in dem durch die jeweilige Position festgelegten räumlichen Suchbereich mehrere Schiffe liegen, wird im nächstfolgenden Block 42 als Suchbereichsmittelpunkt die Position des der Mausposition nächstgelegenen Schiffes festgelegt.

Im nächstfolgenen Block 44 wird eine vorgegebene Ausgangs-Suchbereichsgröße festgelegt (beispielsweise 1km x 1km).

Im folgenden wird anhand der im Datenspeicher 34 erfaßten Schiffsdaten geprüft, ob sich in diesem räumlichen Suchbereich weitere Schiffe aufhalten. Ferner wird der Kurs dieser weiteren Schiffe mit dem Kurs des im Suchbereichsmittelpunkt gelegenen Schiffes verglichen (Block 46). Für den Fall, daß sich keine weiteren Schiffe mit unbekanntem oder ähnlichem Kurs wie das interessierende Schiff im räumlichen Suchbereich aufhalten, wird im nächstfolgenden Block 48 der räumliche Suchbereich beibehalten und anschließend in einem Block 50 eine Abfragesignalfolge abgegeben, die aus einem sog. Abfragetelegramm besteht mit Suchbereichssignal, Kurssignal und ggf. Zufallszeit-Signal (Aktionscode).

Ergibt die Prüfung im Block 46 jedoch, daß sich im Suchbereich wenigstens ein weiteres Schiff mit unbekanntem oder ähnlichem Kurs aufhält, so wird der räumliche Suchbereich in einem Block 52 so lange verkleinert, bis kein entsprechendes Schiff mehr im räumlichen Suchbereich liegt. Sobald dies der Fall ist, wird zum Block 50 übergegangen mit Aussendung des Abfragetelegramms. Dies ist durch einen Funkpfeil 54 symbolisiert.

Gemäß Fig. 4 gehen die im Empfangsbereich der Abfragetelegramme liegenden Antworteinheiten (in Fig. 3 mit Bordtransponder 56 symbolisiert) in der folgenden Weise vor: Nach dem Funkempfang des übertragenen Abfragetelegramms in einem Block 58 werden die bordeigenen Navigationsgeräte (Navigationsanlage, Kompaß) abgefragt, wie die momentane Position und der momentane Kurs lauten (Block 60). In einem nachfolgenden Block 62 wird überprüft, ob die eigene Position im abgefragten, räumlichen Suchbereich liegt. Ist dies nicht der Fall, so erfolgt keine Reaktion (Übergang zu Block 64). Liegt die eigene Position im abgefragten, räumlichen Suchbereich, so wird in einem nachfolgenden Block 66 überprüft, ob der eigene Kurs mit dem Kurs des Abfragetelegramms innerhalb eines vorgegebenen Fehlerintervalls übereinstimmt. Für diesen Fall sowie für den Fall, daß entweder das Abfragetelegramm ohne Kursinformation empfangen wurde oder die Antworteinheit über keine eigene Kursinformation verfügt, wird schließlich in einem Block 68 ein Antworttelegramm ausgesandt, welches sowohl ein Schiffsidentifikationssignal (insbes. Funkrufzeichen) als auch ein die eigene Position angebendes Positionssignal umfaßt.

Die zwischen dem Block 66 und dem Block 68 liegenden Verfahrensschritte in Fig. 4 dienen dazu, zu vermeiden, daß die Abfrageeinheit einander sich zeitlich überlappende Antworttelegramme (garbling) verschiedener Schiffe empfängt. Hierzu wird gem. Fig. 3 von der Abfrageeinheit nach Abgabe eines ersten Abfragetelegramms in einem Block 70 überprüft, ob derartige Überlagerungen vorkommen. Geht überhaupt kein Antworttelegramm ein, so wird in einem nachfolgenden Block 72 der räumliche Suchbereich sowie das Resultat (nämlich keine Antwort) an der Anzeigeeinheit 26 dargestellt. Es folgt ein Ende-Block 74. Es liegt nun am Nautiker, ob er einen weiteren Abfrageversuch, ggf. mit. geändertem Suchbereichsmittelpunkt oder mit geänderter Suchbereichsgröße unternimmt.

Im erwünschten Fall, daß ein einziges Antworttelegramm eintrifft, wird das ermittelte Funkrufzeichen sowie die übermittelte Schiffsposition einschließlich des räumlichen Suchbereichs an der Anzeigeeinheit 26 dargestellt (Block 76 mit nachfolgendem Ende-Block 78). Dasselbe gilt dann, wenn mehrere Antworttelegramme ohne gegenseitige Überlagerung empfangen werden; dementsprechend werden mehrere Schifsspositionen samt Funkrufzeichen dargestellt.

Im allgemeinen werden diese mehreren Antworttelegramme jedoch auf das erste Abfragetelegramm hin angenähert zeitgleich empfangen, so daß die hieraus folgende Signalüberlagerung zu Empfangsproblemen führt. Wird im Block 70 eine derartige Überlagerung festgestellt, so wird ein zweites Abfragetelegramm abgesandt (Block 80) mit einem Zufallszeit-Signal (geänderter Aktionscode). Dieses zweite Abfragetelegramm kann selbsttätig oder manuell nach vorheriger Anzeige von räumlichem Suchbereich und Resultat an der Anzeigeeinheit 26 (Block 82) ausgelöst werden.

Die Antworteinheiten überprüfen vor Abgabe ihres jeweiligen Antworttelegramms jeweils, ob das Abfragetelegramm ein derartiges Zufallszeit-Signal enthält oder nicht. Dies ist in Fig. 4 mit einem Block 84 angedeutet, der zwischen dem Block 66 und dem Block 68 liegt. Liegt kein ZufallszeitSignal vor (entsprechender Aktionscodewert), so wird ohne Zeitverzögerung (Block 86) das Antworttelegramm abgegeben (Block 68). Dies ist im allgemeinen beim ersten Abfragetelegramm der Abfrageeinheit der Fall.

Wird jedoch im Block 84 festgestellt, daß ein Zufallszeit-Signal mit dem Abfragetelegramm übermittelt worden ist, so wird mit Zeitverzögerung (Block 88) weiter fortgefahren. Mit Hilfe eines Zufallszahlengenerators wird eine zufallsbestimmte Zeitverzögerung in einem Block 90 ermittelt und deren Zeitablauf in einem nachfolgenden Block 92 abgewartet; erst dann wird das Antworttelegramm ausgesandt (Block 68). Es schließt sich ein Ende-Block 94 an.

Da die Zeitverzögerung bei den beteiligten Antworteinheiten mit hoher Wahrscheinlichkeit unterschiedlich ist, werden dementsprechend die Antworttelegramme von der Abfrageeinheit zeitlich ausreichend gestaffelt empfangen. Hierbei erfolgt im Block 76 die Darstellung der entsprechenden Positionen und Funkrufzeichen auf der Anzeigeeinheit 26.

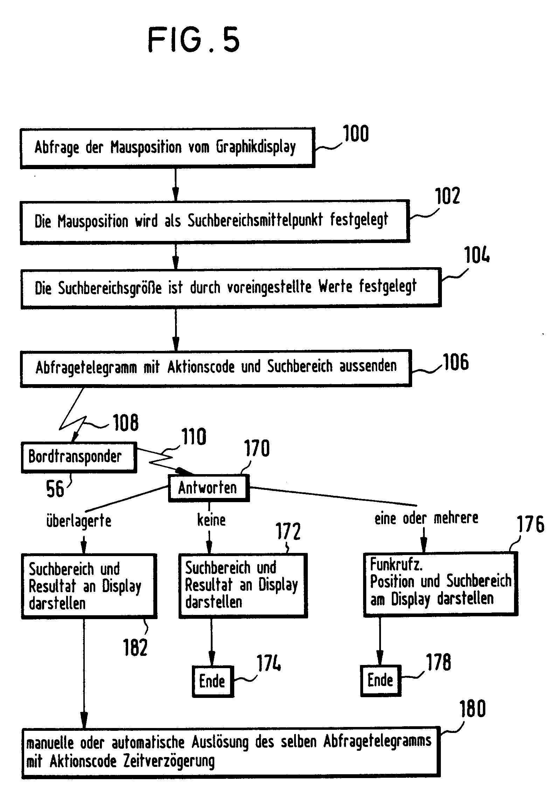

Das vorstehend beschriebene Verfahren stellt selbsttätig und zuverlässig fest, welches Schiff sich an einer vorgegebenen Position befindet. Man kann jedoch auch eine selbsttätige Überwachung eines Kontrollgebiets durchführen mit Feststellung, ob sich im räumlichen Suchbereich ein Schiff und ggf. welches befindet. Man kann ggf. selbsttätig ein größeres Kontrollgebiet überwachen, welches in einzelne räumliche Suchbereiche eingeteilt wird, die der Reihe nach, ggf. zyklisch, daraufhin überprüft werden, welche Schiffe sich jeweils im räumlichen Suchbereich befinden. So könnte beispielsweise ein nationaler Küstenstreifen ständig automatisch überwacht werden. Daneben ist es auch möglich, den räumlichen Suchbereich für die generelle Abfrage manuell einzugeben, wie dies in Fig. 5 in einem Anfangs-Block 100 angedeutet ist. Die Eingabe erfolgt über Abfrage der Mausposition, wenn auch beispielsweise eine α-numerische Tasteneingabe oder dergl. möglich ist. In nachfolgenden Blöcken 102 und 104 wird als Suchbereichsmittelpunkt die Mausposition festgelegt und die Größe des räumlichen Suchbereichs entsprechend voreingestellten Werten festgelegt. Anschließend wird in einem Block 106 veranlaßt, daß das Abfragetelegramm mit Suchbereichsangabe und Aktionscode (bei erstem Abfragetelegramm Aktionscode ohne Zufallszeit-Signal) abgegeben wird (Funkpfeil 108). Von den im Empfangsbereich liegenden Antworteinheiten wird wiederum dann, wenn die eigene Position innerhalb des räumlichen Suchbereichs liegt, jeweils ein Antworttelegramm abgesandt (Funkpfeil 110 in Fig. 5). Die beteiligten Antworteinheiten sind in Figur 5 wiederum als Bordtransponder 56 bezeichnet.

Die Auswertung der von der Abfrageeinrichtung erhaltenen Antworten erfolgt in der gleichen Weise wie in Figur 3 - die beteiligten Blöcke sind in Figur 5 dementsprechend mit denselben Bezugsziffern, jeweils vermehrt um die Zahl 100, versehen.

Das zuletzt beschriebene Verfahren kann auch ohne Radaranlage durchgeführt werden, da die Positionsinformation von den beteiligten Schiffen geliefert wird. Auch kann das Verfahren gemäß Figur 3 selbsttätig dadurch in Gang gesetzt werden, daß ein aufgrund Radarüberwachung festgestelltes neues Radarziel als Suchbereichsmittelpunkt im Block 42 festgelegt wird mit anschließender Identifikationsabfrage. Die erfindungsgemäßen Verfahrensschritte sind unabhängig von der verwendeten Funkfrequenz (UKW, MW, KW).

## Patentansprüche

1. Verfahren zur Identifikation von Schiffen mittels einer Abfrageeinheit (10), die über Funk mit Antworteinheiten (12) an Bord von zu identifizierenden Schiffen in Verbindung tritt, wobei dies mit einer Radaranlage mit Radarzielbestimmungseinrichtung (20,22) verbundene Abfrageeinheit (10) per funk Abfragesignalfolgen abgibt, die ein einen räumlichen Suchbereich festlegendes Suchbereichssignal umfassen, und wobei die die Abfragesignalfolgen empfangenden Antworteinheiten (12) überprüfen, ob die eigene Position innerhalb des Suchbereichs liegt und ggf. per Funk eine das Schiff kennzeichnende Identifikationssignalfolge zum Empfang durch die Abfrageeinheit (10) abgeben, **dadurch gekennzeichnet**, daß die Radarzielbestimmungseinrichtung (20,22) den Kurs eines im räumlichen Suchbereich zu identifizierenden Schiffes bestimmt, daß die Abfrageeinheit (10) daraufhin ein entsprechendes Kurssignal als Teil der Abfragesignalfolge abgibt, und daß die die Abfragesignalfolge empfangenden Antworteinheiten (12) dann, wenn die eigene Position im räumlichen Suchbereich liegt, überprüfen, ob der eigene Kurs mit dem übermittelten Kurs übereinstimmt und nur im Falle der Übereinstimmung innerhalb vorgegebener Toleranzen die jeweilige Identifikationssignalfolge abgeben.

2. Verfahren nach Anspruch 1, **dadurch gekennzeichnet**, daß die einen Schiffspositions-Speicher (34) aufweisende Abfrageeinheit (10) vor Abgabe der Abfragesignalfolge feststellt, ob von den im Schiffspositionsspeicher (34) gespeicherten Schiffen mehr als eines in den gegenwärtigen Suchbereich fällt, und, falls dies zutrifft, den Suchbereich so weit verkleinert, bis lediglich ein einziges gespeichertes Schiff in den Suchbereich fällt.

3. Verfahren nach Anspruch 2, **dadurch gekennzeichnet**, daß die Abfrageeinheit (10) nur dann den Suchbereich verkleinert, wenn die Radarzielbestimmungseinrichtung (20,22) festgestellt hat, daß wenigstens zwei in den gegenwärtigen Suchbereich fallende gespeicherte Schiffe im wesentlichen gleichen Kurs haben, oder wenn wenigstens eines der in den gegenwärtigen Suchbereich fallenden gespeicherten Schiffe unbekannten Kurs hat.

4. Verfahren nach einem der Ansprüche 2 oder 3, **dadurch gekennzeichnet**, daß nach Eingabe eines Suchbereichsmittelpunkts in die Abfrageeinheit (10), vorzugsweise mittels Maus (28), Abfrageeinheit (10) die Position des dem Suchbereichsmittelpunkt nächstgelegenen gespeicherten Schiffes feststellt und diese Position anschließend als neuen Suchbereichsmittelpunkt festlegt.

5. Verfahren nach einem der vorhergehenden Ansprüche, **dadurch gekennzeichnet**, daß die Abfrageeinheit (10) zur selbsttätigen Überwachung eines Kontrollgebiets in regelmäßigen Zeitabständen und/oder jeweils ausgelöst durch ein auf ein Einfahren eines Schiffes in das Kontrollgebiet hinweisendes Signal wenigstens eine Abfragesignalfolge abgibt.

6. Verfahren nach Anspruch 5, **dadurch gekennzeichnet,** daß das Kontrollgebiet in mehrere Suchbereiche eingeteilt wird, und daß die Abfrageeinheit (10) selbsttätig der Reihe nach sämtliche Suchbereiche durch Abgabe von Abfragesignalfolgen mit entsprechenden Suchbereichssignalen überprüft.

7. Verfahren nach Anspruch 6, **dadurch gekennzeichnet**, daß die Abfrageeinheit (10) sämtliche Suchbereiche zyklisch überprüft.

8. Verfahren nach einem der vorhergehenden Ansprüche, **dadurch gekennzeichnet**, daß die Abfrageeinheit (10) dann, wenn sie sich zeitlich überlappende Identifikationssignale empfängt, mit der nächsten Abfragesignalfolge ein Zufallszeit-Signal abgibt, welches bei Empfang durch eine Antworteinheit (12) diese veranlaßt, ihre Identifikationssignalfolge mit einer zufallsgesteuerten Zeitverzögerung abzugeben.

9. Verfahren nach einem der vorhergehenden Ansprüche, **dadurch gekennzeichnet**, daß die Abfrageeinheit (10) zusammen mit der Abfragesignalfolge ein eingegebenes Identifikationsmerkmal für ein bestimmtes Schiff abgibt, welches nur die Antworteinheit (12) dieses Schiffes zur Abgabe einer Antwortsignalfolge veranlaßt.

10. Verfahren nach einem der Ansprüche 1-8, **dadurch gekennzeichnet**, daß die Abfrageeinheit (10) zusammen mit der Abfragesignalfolge ein eingegebenes Identifikationsmerkmal für ein bestimmtes Schiff abgibt, welches nur die Antworteinheiten (12) derjenigen Schiffe zur Abgabe einer Antwortsignalfolge veranlaßt, deren Identifikationsmerkmal nicht mit dem in der Abfragesignalfolge übermittelten Identifikationsmerkmal übereinstimmt.

11. Vorrichtung zur Durchführung des Verfahrens zur Identifikation von Schiffen nach Anspruch 1, umfassend eine Abfrageeinheit (10), die mit einer Radaranlage mit Radarzielbestimmungseinrichtung (20, 22) verbunden ist und per Funk Abfragesignalfolgen abgibt, die ein einen räumlichen Suchbereich festlegendes Suchbereichssignal umfassen, sowie wenigstens eine Anworteinheit (12), die zum Empfang der Abfragesignalfolgen auf einem zu identifizierenden Schiff angeordnet ist und Mittel aufweist, die überprüfen, ob die eigene Position innerhalb des Suchbereichs liegt und die dann ggf. per Funk eine das Schiff kennzeichnende Identifikationssignalfolge zum Empfang durch die Abfrageeinheit abgeben,
**dadurch gekennzeichnet**, daß die Radarzielbestimmungseinrichtung (20, 21) den Kurs eines im räumlichen Suchbereich zu identifizierenden Schiffes bestimmt, daß die Abfrageeinheit (10) zur Abgabe eines entsprechenden Kurssignals als Teil der Abfragesignalfolge ausgebildet ist, und daß die Antworteinheit (12) dann, wenn die eigene Position im räumlichen Suchbereich liegt, den eigenen Kurs mit dem mit der Abfragesignalfolge übermittelten Kurs vergleicht und bei Übereinstimmung der Kurse innerhalb vorgegebener Toleranzen die jeweilige Identifikationssignalfolge abgibt.

## Claims

1. A method of identifying ships by means of an enquiry unit (10) which communicates by radio with responding units (12) on board ships which are to be identified, the enquiry unit (10) connected to a radar installation with a radar target determining means (20, 22) delivers by radio sequences of enquiry signals which include a search area signal which establishes a spatial search area, the response units (12) receiving the enquiry signal sequences checking whether their own position lies within the search area and possibly emitting by radio a sequence of identification signals identifying the ship and intended to be received by the enquiry unit (10), characterised in that the radar target determining means (20, 22) determines the course of a ship to be identified and present in the spatial search area and in that the enquiry unit (10) thereupon emits a corresponding course signal as part of the sequence of enquiry signals arid in that when their own position is in the spatial search area, the response units (12) receiving this series of enquiry signals check whether their own course is coincident with the communicated course and only emit the appropriate series of identification signals in the event of concordance with predetermined tolerances.

2. A method according to Claim 1, characterised in that prior to emitting the series of enquiry signals, the enquiry unit (10) which comprises a ship's position memory (34) establishes whether, of the ships stored in the ship's position memory (34), more than one falls within the current search area and, if this applies, reduces the search area sufficiently that only one single memory-stored ship falls within the search area.

3. A method according to Claim 2, characterised in that the enquiry unit (10) only reduces the size of the search area when the radar target determining means (20, 22) has established that at least two memory-stored vessels which fall within the current search area are following substantially the same course, or if at least one of the memory-stored ships falling within the current search area is following an unknown course.

4. A method according to one of Claims 2 or 3, characterised in that once a central point of a search area has been fed into the enquiry unit (10), preferably by means of a mouse (28), the enquiry unit (10) establishes the position of the memory-stored vessel which is situated closest to the central point of the search area and fixes this position then as a fresh central point of the search area.

5. A method according to one of the preceding Claims, characterised in that for automatic monitoring of a controlled area, the enquiry unit (10) emits at least one series of enquiry signals at regular intervals of time and/or as a result of being triggered by a signal indicating that a vessel is sailing into the controlled area

6. A method according to Claim 5, characterised in that the controlled area is subdivided into several search areas and in that the enquiry unit (10) automatically checks all the search areas one after another by emitting a series of enquiry signals with corresponding search area signals.

7. A method according to Claim 6, characterised in that the enquiry unit (10) checks all search areas cyclically.

8. A method according to one of the preceding Claims, characterised in that when it receives identification signals which overlap in time, the enquiry unit (10) emits with the next series of enquiry signals a random time signal which, when received by a response unit (12), causes this latter to emit its series of identification signals with a randomly controlled time delay.

9. A method according to one of the preceding Claims, characterised in that the enquiry unit (10) emits together with the series of enquiry signals an input identification feature for a specific vessel which causes only the response unit (12) on this vessel to emit a series of response signals.

10. A method according to one of Claims 1 to 8, characterised in that together with the series of enquiry signals the enquiry unit (10) emits an input identification feature for a specific vessel which causes only the response units (12) on those vessels to give out a series of response signals whose identification feature does not coincide with the identification feature transmitted in the series of enquiry signals.

11. An apparatus for carrying out the method of identifying ships according to Claim 1, comprising an enquiry unit (10) which is connected to a radar installation with radar target determining means (20, 22) and which emits by radio series of enquiry signals which comprise a search area signal establishing a spatial search area, as well as at least one response unit (12) which is disposed to receive the series of enquiry signals on a ship to be identified and has means of checking whether its own position is within the search area, emitting by radio a series of identification signals identifying the ship and intended to be received by the enquiry unit, characterised in that the radar target determining means (20, 21) determines the course of a ship to be identified in the spatial search area and in that the enquiry unit (10) is, for emission of a corresponding course signal, constructed as a part of the series of enquiry signals and in that when its own position falls within the spatial search area, the response unit (12) compares its own course with the course transmitted with the series of enquiry signals and, in the event of the course coinciding, emits the appropriate series of identification signals within predetermined tolerances.

## Revendications

1. Procédé pour l'identification de bateaux au moyen d'une unité d'interrogation (10), qui entre en liaison par radio avec des unités de réponse (12) à bord de bateaux à identifier, l'unité d'interrogation (10) reliée à une installation de radar, avec dispositif (20, 22) de détermination de cibles de radar, émettant par radio des séquences de signaux d'interrogation, qui comprennent un signal de secteur de recherche déterminant un secteur de recherche spatial, et les unités de réponse (12) recevant les séquences de signaux d'interrogation contrôlant si la position propre se situe à l'intérieur du secteur de recherche spatial et émettant le cas échéant par radio une séquence de signaux d'identification caractérisant le bateau pour réception par l'unité d'interrogation (10), caractérisé en ce que le dispositif (20, 22) de détermination de cibles de radar détermine le cap d'un bateau à identifier dans le secteur de recherche spatial, que l'unité d'interrogation (10) émet ensuite un signal de cap correspondant, en tant que partie d'une séquence de signaux d'interrogation, et que les unités de réponse (12) recevant la séquence de signaux d'interrogation, contrôlent alors, lorsque la position propre se situe dans le secteur de recherche spatial, si le cap propre correspond au cap transmis et émettent la séquence de signaux d'identification considérée, seulement dans le cas d'une correspondance, à l'intérieur de tolérances données.

2. Procédé selon la revendication 1, caractérisé en ce que, l'unité d'interrogation (10), présentant une mémoire (34) de position des bateaux, détecte avant l'émission de la séquence de signaux, si, parmi les bateaux mémorisés dans la mémoire (34) des positions de bateaux, plus d'un se situe dans le secteur de recherche spatial du moment, et dans l'affirmative, réduit le secteur de recherche spatial, jusqu'à ce qu'un seul bateau mémorisé se situe dans le secteur de recherche spatial.

3. Procédé selon la revendication 2, caractérisé en ce que, l'unité d'interrogation (10) ne réduit le secteur de recherche spatial, que lorsque le dispositif (20, 22) de détermination des cibles de radar a constaté qu'au moins deux bateaux mémorisés, se situant dans le secteur de recherche spatial du moment, suivent essentiellement le même cap, ou lorsqu'au moins l'un des bateaux mémorisés, se situant dans le secteur de recherche spatial du moment, suit un cap inconnu.

4. Procédé selon l'une quelconque des revendications 2 ou 3, caractérisé en ce qu'après avoir saisi le point central du secteur de recherche spatial dans l'unité d'interrogation (10), de préférence au moyen d'une souris (28), l'unité d'interrogation (10) détecte la position du bateau mémorisé, situé le plus proche du point central du secteur de recherche spatial, et détermine ensuite cette position, comme nouveau point central du secteur de recherche spatial.

5. Procédé selon l'une quelconque des revendications précédentes, caractérisé en ce que, pour la surveillance automatique d'une zone de contrôle, l'unité d'interrogation (10) émet à intervalles réguliers, et/ou en étant déclenchée chaque fois par un signal indiquant la pénétration d'un bateau dans le secteur contrôlé, au moins une séquence de signaux d'interrogation.

6. Procédé selon la revendication 5, caractérisé en ce que la zone de contrôle est divisée en plusieurs secteurs de recherche spatiaux, l'unité d'interrogation (10) selon la présente invention surveillant alors automatiquement l'un après l'autre, l'ensemble des secteurs de recherche spatiaux, en émettant des séquences de signaux d'interrogation, avec des signaux de secteur de recherche spatial correspondants.

7. Procédé selon la revendication 6, caractérisé en ce que, l'unité d'interrogation (10) surveille, de manière cyclique, l'ensemble des secteurs de recherche spatiaux.

8. Procédé selon l'une quelconque des revendications précédentes, caractérisé en ce que, l'unité d'interrogation (10) émet un signal chronologique aléatoire, avec la séquence d'interrogation suivante, lorsqu'elle reçoit des signaux d'identification se chevauchant dans le temps, lequel, lors de la réception par une unité de réponse (12), amène celle-ci à émettre sa séquence de signaux d'identification selon une temporisation propre, commandée de manière aléatoire.

9. Procédé selon l'une quelconque des revendications précédentes, caractérisé en ce que, l'unité d'interrogation (10) émet, avec la séquence de signaux d'interrogation, une caractéristique d'identification saisie, pour un bateau déterminé, laquelle amène uniquement l'unité de réponse (12) de ce bateau à émettre une séquence de signaux de réponse.

10. Procédé selon l'une quelconque des revendications 1 à 8, caractérisé en ce que, l'unité d'interrogation (10) émet une caractéristique d'identification d'un bateau déterminé, saisie avec la séquence de signaux d'interrogation (12), laquelle amène seulement les unité de réponse des bateaux, dont la caractéristique d'identification ne coïncide pas avec la caractéristique d'identification transmise avec la séquence de signaux d'interrogation, à émettre une séquence de signaux de réponse.

11. Dispositif pour la mise en oeuvre, du procédé d'identification de bateaux selon la revendication 1, comprenant une unité d'interrogation (10) qui est reliée avec un radar avec dispositif (20, 22) de détermination de cibles de radar et émet par radio des séquences de signaux d'interrogation, qui comprennent un signal de secteur de recherche déterminant un secteur de recherche, ainsi qu'au moins une unité de réponse (12), qui est disposée sur un bateau à identifier pour recevoir des séquences de signaux d'interrogation et présente des moyens, qui contrôlent si la position propre se situe à l'intérieur du secteur de recherche et qui alors, le cas échéant, émettent par radio une séquence de signaux d'identification caractérisant le bateau pour réception par l'unité d'interrogation, caractérisé en ce que le dispositif (20, 21) de détermination de cibles de radar détermine le cap d'un bateau à identifier dans le secteur de recherche spatial, que l'unité d'interrogation (10) est agencée pour délivrer une séquence de signaux d'interrogation pour émission d'un signal de cap correspondant, et que l'unité de réponse (12) compare alors, lorsque la position propre se situe dans le secteur de recherche spatial, le cap propre avec le cap transmis avec la séquence de signaux d'interrogation et émet dans le cas d'une correspondance des cap à l'intérieur de tolérances données, la séquence de signaux d'identification considérée.
